# EUROPEAN PATENT SPECIFICATION

(11) **EP 1 085 822 B1**
(45) Date of publication and mention of the grant of the patent: **12.11.2003**
(21) Application number: 99927909.4
(22) Date of filing: 08.06.1999
(51) Int. Cl.: A23L 1/16, A23L 1/22

(54) **PROCESS FOR THE PREPARATION OF FLAVOURED NOODLES**
VERFAHREN ZUR HERSTELLUNG VON AROMATISIERTE TEIGWAREN
PROCEDE DE FABRICATION DE NOUILLES AROMATISEES

(30) Priority: 16.06.1998 SG 9801421
(43) Date of publication of application: 28.03.2001
(73) Proprietor: SOCIETE DES PRODUITS NESTLE S.A., 1800 Vevey (CH)
(72) Inventor: TEH, Shiok Guat, Yuan Ching Road, Singapore 618645 (SG); SARSFIELD, Mary, Bridget, New Milford, CT 06776 (US)
(74) Representative: Marchant, James Ian
(86) International application number: EP9903932
(87) International publication number: WO99065331

(56) References cited:
- EP-A- 0 468 251
- EP-A- 0 705 541
- US-A- 5 436 015
- DATABASE WPI Section Ch, Week 9748 Derwent Publications Ltd., London, GB; Class D11, AN 97-520714 XP002114124 & JP 09 248147 A (HOUSE SHOKUHIN KOGYO KK) , 22 September 1997 (1997-09-22)
- DATABASE WPI Section Ch, Week 9306 Derwent Publications Ltd., London, GB; Class D13, AN 93-049114 XP002114125 & JP 05 000046 A (INUZUKA M), 8 January 1993 (1993-01-08)

## Description

The present invention relates to the production of flavoured noodles and more particularly to a method of incorporating a savoury flavour into noodles.

Instant noodles conventionally contain seasonings in paste or dehydrated form which comprise various flavour ingredients in a sachet within the noodle package. These flavour ingredients may include sources of peptides and amino acids in the form of biologically hydrolysed plant protein such as soya sauce, yeast extract, cysteine, dextrose, together with meat or vegetable extract, fat, modified starch, particulated fried garnish such as shallot, onions, garlic or chilli, flavoured oil, a liquid seasoning such as soya sauce, and powdered seasonings, spices, flavours and the like. The ingredients of the noodle seasoning are kept separate from the noodles until the moment of consumption of the noodles. At the time of preparing the noodles for consumption, the consumer opens the sachet and adds the contents of the sachet to the noodles and either boils the noodle and the contents of the sachet in water or adds boiling water to the noodle and the contents of the sachets.

However, the incorporation of all the flavour ingredients in the sachet is very expensive. If all of the flavour ingredients are added to the dough, it is usually necessary to add more than the amount required because significant losses are incurred during heating and processing treatments, etc. In addition, after steaming and drying of the noodles, the flavour of the noodles is often not what is desired.

EP-A-0,705,541 discloses a method for producing herb pasta containing high levels of herb solids, that is, from about 2 to 15 weight %. The method involves first forming a homogenous aqueous paste of flour and herb solids containing about 27 to about 33 weight % water. The homogenous paste is then extruded to form pasta-shaped extrudates. The extrudates are dried under high temperature and low relative humidity.

US patent no. 5,436,015 provides a process for producing a flavoured-enrobed pasta product. The process comprises applying a first aqueous composition to pasta, contacting the pasta with an edible coating material to form a coated pasta, applying a second aqueous composition in conjunction with intermixing of the coated pasta and drying the coated pasta.

EP-A-0,468,251 provides a process for the production of flavoured pastas which comprises the steps of first preparing a mixture containing 50 to 80 parts by weight of a ground starchy product, 15 to 25 parts by weight starch, 0.4 to 2 parts by weight of an emulsifier, 0.5 to 2 parts by weight of a gelling agent, 5 to 20 parts by weight of a flavouring composition and softened water. The pasta is then shaped by extrusion cooking of the mixture, contacting the shaped pasta with an aqueous calcium solution and drying the pasta.

EP-A-0,960,570 discloses a quick cooking partially pre-cooked pasta product having a density from about 0.6 to about 1.05 g/cc and a degree of gelatinisation from about 15% to about 80%. The pasta may comprise a variety of natural and artificial flavours, herbs, spices, cheeses and the like in amounts from 0% to about 15%, and when they are employed they are typically added in amounts of at least about 0.1%.

EP-A-0,953,293 discloses a full moisture shelf stable pasta product which comprises a cooked or precooked pasta having a dry matter content of from 30 to 45% by weight, an acid and an oil, wherein the oil content is preferably 0.5 to 5% by weight of the cooked or precooked pasta.

EP-A-0,948,905 disloses a process for producing noodles, which comprises using an enzyme preparation comprising a transglutaminase and a carbonate and/or a reducing agent, in addition to the main starting materials such as cereal flour, as the main starting material. The texture of the noodles produced by this process is improved by imparting a good balance between firmness and glutinousness to ordinary noodles, of which functions such as convenience, restorability, shelf stability and the like are required.

We have found that by preheating flavour ingredients to obtain a partial flavour reaction and adding the preheated flavour ingredients to the dough ingredients or applying them to the dough sheets, the desirable savoury flavour develops during the steaming and frying stages in the normal noodle manufacturing processes. By applying the flavour ingredients on the dough sheets, the flavour is not diluted by the dough material and is thus stronger than if the flavour ingredients were added to the dough.

Accordingly, the present invention provides a process for the preparation of flavoured noodles which comprises blending flour and water to form a dough, sheeting the dough to form dough sheets, slitting the dough sheets into strips of noodles of the desired width, steaming the noodles to gelatinise the starch, then frying or air drying the noodles and cooling the fried or air dried noodles characterised in that flavour ingredients are preheated at a temperature of from 60° to 100°C for a period of from 10 to 90 minutes and the preheated flavour ingredients are added to the dough ingredients or applied to the dough sheets.

The process of the present invention may be applicable for fried noodles, soakable fried noodles or air dried noodles.

The flour is conveniently durum or wheat flour and is usually present in an amount of from 70 to 85% by weight based on the total weight of the dough. depending on the variety and particle size. The amount of water mixed with the flour is normally from 15 to 30% by weight based on the total weight of the dough. The temperature of the water mixed with the flour may be from 5° to 30°C and more usually from 10° to 25°C. The water used may be acid or alkaline and the pH is usually from 6 to 7. The dough is conveniently mixed for from about 5 to 30 minutes.

The dough may advantageously contain other conventional noodle ingredients such as salt in an amount up to 2%, sodium carbonate in an amount up to 0.5%, potassium carbonate in an amount up to 0.5%, wheat gluten in an amount up to 10%, whole egg or egg yolk in an amount up to 5%, sodium hexametaphosphate in an amount up to 0.5%, carboxymethylcellulose in an amount up to 0.5%, and glyceryl monostearate in an amount up to 2%, all amounts being given by weight based on the total weight of the noodle dough. It is to be understood that wheat gluten, eggs, and glyceryl monostearate are optional ingredients in the dry mix and are not essential in the production of the noodle. It is also possible to use propylene glycol alginate in the dry ingredient mix to obtain a noodle with an elastic and firm texture, preferably in an amount of from 0.01 to 1.0% by weight based on the weight of the noodle dough.

The sheeting of the dough may be carried out by conventional methods, for example, by kneading and rolling into sheets or by laminating.

The preheated flavour ingredients added to the dough ingredients or applied to the dough sheets may be, for instance, a source of peptides and amino acids in the form of biologically hydrolysed plant protein such as soya sauce or wheat gluten sauce, yeast extract, cysteine, thiamine, dextrose or xylose, meat or vegetable extract, fat or flavoured oil.

The amount of preheated flavour ingredient added to the dough ingredients or applied to the dough sheets may be from 0.1 to 5%, preferably from 0.25 to 3% and more preferably from 0.4 to 2.5% by weight based on the total weight of the dough sheets.

The preheated flavour ingredients are preferably added to the dough ingredients or applied to the dough sheets in the form of a solution, suspension or dispersion, e.g. in water where the moisture content may be from 50 to 70% and preferably from 65 to 75% by weight. The preheated flavour ingredient may conveniently be applied by immersion or spraying.

When the preheated flavour ingredient is applied to the dough sheets it is preferably applied between two dough sheets.

The preheating of the flavour ingredients is preferably carried out at a temperature of from 80° to 98°C and more preferably from 85° to 95°C for a period of from 15 to 60 minutes longer periods of time conveniently being used at lower temperatures. The preheating is conveniently carried out in aqueous suspension.

The dough sheets are slit into strips of noodles preferably having a width of from 1 to 1.5mm.

The steaming of the noodles may be carried out using saturated steam or steam at atmospheric condition, e.g. at a temperature from 85° to 100°C and conveniently from 95° to 100°C for a period of from 1 to 5 minutes, preferably from 1.5 to 3.5 minutes. The steaming cooks or gelatinises at least part of the surface of the noodles, e.g. at least 50% and preferably substantially all the surface of the noodles. After steaming, the noodles may be folded to fit a mould of the desired size.

Frying of the steamed noodles to give fried noodles may be performed in a fryer at 125° to 170°C and preferably from 135° to 160°C. The duration of the frying may be from 20 to 100 seconds and preferably from 40 to 80 seconds. One advantage of frying the noodles is that new or different flavour notes are developed from the preheated partially reacted flavour ingredients during the frying process.

Air drying of the steamed noodles to give air dried noodles may be performed in a dryer, e.g. a belt dryer or an impingement dryer, for a period of from 5 to 30 minutes and preferably from 10 to 20 minutes. The temperature of the drying may be from 85° to 200°C and preferably from 125° to 175°C.

Finally, the fried or air dried noodles are cooled to a temperature below 40°C and then packaged.

The noodle package may or may not contain a seasoning in a separate sachet within the noodle package. By preparing the noodles according to the process of this invention in which preheated flavour ingredients are added to the dough ingredients or applied to the dough sheets, it is possible to reduce the amount of flavour in the seasoning in the separate sachet, e.g. it need only contain solid flavouring ingredients such as salt, pepper or chilli, etc.

In the absence of a seasoning in a separate sachet, it is possible to consume the flavoured noodles as a dry snack.

The noodles may beprepared for consumption by either boiling in water for a few minutes, e.g. 1-5 minutes or by soaking in boiled water for a few minutes, e.g. 1-5 minutes.

### EXAMPLES

The following Examples further illustrate the present invention. Parts and percentages are expressed by weight.

### Example 1

A dough mixture is prepared from the following ingredients:

| | |
|---|---|
| Ruman Api Flour | 78.45 parts |
| Salt | 1.38 parts |
| Sodium carbonate | 0.04 parts |
| Potassium carbonate | 0.05 parts |
| Sodium Hexametaphosphate | 0.07 parts |
| CMC | 0.14 parts |
| Deionised water | 19.87 parts |

2 parts of flavour ingredients containing wheat gluten sauce powder, cysteine and dextrose are preheated at 95°C for 30 minutes. An aqueous dispersion of the preheated flavour ingredients is prepared and added to the dough ingredients.

The above dough mixture and the aqueous dispersion of the flavour ingredients are mixed in a Fuji Horizontal Mixer for 15-20 minutes and the dough is sheeted to a thickness of about 5mm.

The dough sheets are reduced in stages to a thickness of 3mm, 2mm and then 1mm, cut to the desired length for a target weight of 80-85g and slit to give noodles having a width of 1.15mm in a Kiriha No. 26 Slitter. The noodles are steamed at 100°C with saturated steam for 120 seconds, folded to fit a mould of 110 x 110 x 25mm, fried in a fryer at 132°C for 50 seconds, air cooled to less than 40°C and packaged.

A seasoning containing salt, pepper and chilli is sealed in a sachet and placed in the noodle package.

The noodles are prepared for consumption by boiling in 420ml of water for 2-3 minutes. The noodles have a very desirable savoury taste.

### Example 2

A similar procedure to that described in Example 1 is followed except that, instead of frying the folded steamed noodles, the folded steamed noodles are air dried for 5 minutes at 150°C before being air cooled and packaged.

The noodles are prepared for consumption by adding the noodles and seasoning to 450ml of boiled water, cooking for 3 minutes with occasional stirring, removing from the heat and allowing to stand for 1 minute before tasting. The noodles have a very desirable savoury taste.

## Claims

1. A process for the preparation of flavoured noodles which comprises blending flour and water to form a dough, sheeting the dough to form dough sheets, slitting the dough sheets into strips of noodles of the desired width, steaming the noodles to gelatinise the starch, then frying or air drying the noodles and cooling the fried or air dried noodles **characterised in that** flavour ingredients are preheated at a temperature of from 60° to 100°C for a period of from 10 to 90 minutes and the preheated flavour ingredients are added to the dough ingredients or applied to the dough sheets.

2. A process according to claim 1 wherein the preheated flavour ingredient added to the dough ingredients or applied to The dough sheets is a source of peptides and amino acids, yeast extract, cysteine, thiamine, dextrose, xylose, meat extract, vegetable extract, fat or flavoured oil

3. A process according to claim 1 or claim 2 wherein the preheated flavour ingredient added to the dough ingredients or applied to the dough sheets is soya sauce.

4. A process according to any of claims 1 to 3 wherein the amount of preheated flavour ingredient added to the dough ingredients or applied to the dough sheets is from 0.1 to 5 % by weight based on the total weight of the dough sheets.

5. A process according to any of claims 1 to 4 wherein the preheated flavour ingredient is added to the dough ingredients or applied to the dough sheets in the form of a solution or dispersion.

6. A process according to any of claims 1 to 5 wherein the preheated flavour ingredient is applied between two dough sheets.

7. A process according to any of claims 1 to 6 wherein the preheating of the dough ingredients is carried out at a temperature of from 80° to 98°C.

8. A process according to any of claims 1 to 7 wherein the preheating of the dough ingredients is carried out at a temperature of from 85° to 95°C.

9. A process according to any of claims 1 to 8 wherein the preheating of the dough ingredients is carried out for a period of from 15 to 60 minutes.

## Patentansprüche

1. Verfahren für die Zubereitung aromatisierter Nudeln, das das Mischen von Mehl und Wasser, um einen Teig zu bilden, das Auswalzen des Teigs, um Teigblätter zu bilden, das In-Streifen-schneiden der Teigblätter in Streifen von Nudeln der gewünschten Breite, das Dampfbehandeln der Nudeln, um die Stärke zu gelatinieren, dann das Backen oder Lufttrocknen der Nudeln und das Kühlen der gebackenen oder luftgetrockneten Nudeln umfasst, **dadurch gekennzeichnet, dass** Aromazutaten bei einer Temperatur zwischen 60 und 100°C für eine Zeitdauer zwischen 10 und 90 Minuten vorgewärmt werden, und die vorgewärmten Aromazutaten den Teigzutaten zugegeben werden oder auf die Teigblätter angewendet werden.

2. Verfahren nach Anspruch 1, bei dem die den Teigzutaten zugegebenen oder auf die Teigblätter angewendete Aromazutaten eine Quelle von Peptiden und Aminosäuren, Hefeextrakt, Cystein, Thiamin, Dextrose, Xylose, Fleischextrakt, Gemüseextrakt, Fett oder aromatisiertem Öl ist.

3. Verfahren nach Anspruch 1 oder Anspruch 2, bei dem die den Teigzutaten zugegebenen oder auf die Teigblätter angewendeten Aromazutaten Sojasauce ist.

4. Verfahren nach einem der Ansprüche 1 bis 3, bei dem die Menge den Teigzutaten zugegebenen oder auf die Teigblätter angewendeten vorgewärmten Aromazutaten zwischen 0,1 und 5 Gew.% auf der Basis des Gesamtgewichts der Teigblätter beträgt.

5. Verfahren nach einem der Ansprüche 1 bis 4, bei dem die den Teigzutaten zugegebenen oder auf die Teigblätter angewendeten Aromazutaten in der Form einer Lösung oder einer Dispersion vorliegt.

6. Verfahren nach einem der Ansprüche 1 bis 5, bei dem die vorgewärmten Aromazutaten zwischen zwei Teigblättern angewendet wird.

7. Verfahren nach einem der Ansprüche 1 bis 6, bei dem das Vorwärmen der Teigzutaten bei einer Temperatur zwischen 80 und 98°C ausgeführt wird.

8. Verfahren nach einem der Ansprüche 1 bis 7, bei dem das Vorwärmen der Teigzutaten bei einer Temperatur zwischen 85 und 95°C ausgeführt wird.

9. Verfahren nach einem der Ansprüche 1 bis 8, bei dem das Vorwärmen der Teigzutaten für eine Zeitdauer zwischen 15 und 60 Minuten ausgeführt wird.

## Revendications

1. Procédé pour la préparation de nouilles aromatisées qui comprend le mélange de farine et d'eau pour former une pâte, la mise en feuilles de la pâte pour former des feuilles de pâte, la division des feuilles de pâte en lanières de nouilles de la largeur souhaitée, la cuisson à la vapeur des nouilles pour gélifier l'amidon, puis la friture ou le séchage par air des nouilles et le refroidissement des nouilles frites ou séchées par air, **caractérisé en ce que** les ingrédients aromatiques sont préchauffés à une température de 60°C à 100°C pendant une durée de 10 à 90 minutes et les ingrédients aromatiques préchauffés sont ajoutés aux ingrédients de la pâte ou appliqués sur les feuilles de pâte.

2. Procédé selon la revendication 1, dans lequel l'ingrédient aromatique préchauffé ajouté aux ingrédients de la pâte ou appliqué sur les feuilles de pâte est une source de peptides et d'acides aminés, d'extrait de levure, de cystéine, de thiamine, de dextrose, de xylose, d'extrait de viande, d'extrait de légumes, de matières grasses ou d'huile aromatisée.

3. Procédé selon la revendication 1 ou la revendication 2, dans lequel l'ingrédient aromatique préchauffé ajouté aux ingrédients de la pâte ou appliqué sur les feuilles de pâte est de la sauce de soja.

4. Procédé selon l'une quelconque des revendications 1 à 3, dans lequel la quantité d'ingrédient aromatique préchauffé ajouté aux ingrédients de la pâte ou appliqué sur les feuilles de pâte est de 0,1 à 5 % en poids sur la base du poids total des feuilles de pâte.

5. Procédé selon l'une quelconque des revendications 1 à 4, dans lequel l'ingrédient aromatique préchauffé est ajouté aux ingrédients de la pâte ou appliqué sur les feuilles de pâte sous la forme d'une solution ou d'une dispersion.

6. Procédé selon l'une quelconque des revendications 1 à 5, dans lequel l'ingrédient aromatique préchauffé est appliqué entre deux feuilles de pâte.

7. Procédé selon l'une quelconque des revendications 1 à 6, dans lequel le préchauffage des ingrédients de la pâte est réalisé à une température de 80 à 98°C.

8. Procédé selon l'une quelconque des revendications 1 à 7, dans lequel le préchauffage des ingrédients de la pâte est réalisé à une température de 85 à 95°C.

9. Procédé selon l'une quelconque des revendications 1 à 8, dans lequel le préchauffage des ingrédients de la pâte est réalisé pendant une durée de 15 à 60 minutes.
